# EUROPEAN PATENT SPECIFICATION

(11) **EP 1 161 860 B1**
(45) Date of publication and mention of the grant of the patent: **19.12.2007**
(21) Application number: 01304879.8
(22) Date of filing: 04.06.2001
(51) Int. Cl.: A01K 1/015

(54) **Animal excretions-treating material capable of being disposed of in flush toilets**
Material zur Behandlung von Tierexkrementen, welches in einem WC beseitigbar ist
Matériau pour traiter les excréments d'animaux capable d'être rejeté dans un WC

(30) Priority: 06.06.2000 JP 2000169109
(43) Date of publication of application: 12.12.2001
(73) Proprietor: Unicharm PetCare Corporation, Shinagawa-ku, Tokyo 140-0031 (JP)
(72) Inventor: Ochi, Kengo, c/o Pet Car Business Div., Shinagawa-ku, Tokyo 140-0031 (JP); Ikegami, Takeshi, c/o Pet Car Business Div., Shinagawa-ku, Tokyo 140-0031 (JP)
(74) Representative: Parry, Christopher Stephen

(56) References cited:
- EP-A- 0 585 928
- PATENT ABSTRACTS OF JAPAN vol. 1999, no. 10, 31 August 1999 (1999-08-31) & JP 11 127713 A (UNI CHARM CORP), 18 May 1999 (1999-05-18) & US 6 148 768 A (OCHI ET AL) 21 November 2000 (2000-11-21)
- PATENT ABSTRACTS OF JAPAN vol. 2000, no. 13, 5 February 2001 (2001-02-05) & JP 2000 270702 A (MIRION:KK), 3 October 2000 (2000-10-03) & US 6 371 050 B1 (MOCHIZUKI ISAO) 16 April 2002 (2002-04-16)

## Description

### BACKGROUND OF THE INVENTION

### FIELD OF THE INVENTION

The present invention relates to a water-decomposable material for treating excretions of animals such as cats, dogs, pigs, rats, etc.

### DESCRIPTION OF THE RELATED ART

For simplifying treatment of animal excretions, typically used is an excretions-absorbing material generally referred to as cat litter that comprises any of zeolite, bentonite and pulp. For concrete method of use, the excretions-absorbing material is spread over an area where animals will excrete, for example, it is put in a tray (a tray is also referred to as a litter box) so that it can absorb excretions. After having absorbed excretions, the excretions-absorbing material is removed and discarded. The following types of such an absorbent material have been investigated for treating animal excretions. One type of an absorbent material comprises specifically-processed absorbent grains which, after having absorbed excretions, bond to each other and mass into a solid. This is convenient for use in a sanitary condition, since its solid having absorbed excretions can be removed with ease. In addition, if the material having absorbed excretions can be disposed of in flush toilets as is the case with human excretions, it will become more convenient. From this viewpoint, another type of an absorbent material which, after having absorbed excretions, can be disposed of in flush toilets.

Some excretions-treating materials capable of solidifying after having absorbed excretions and some others for animal use capable of being disposed of in flush toilets are known. Japanese Unexamined Patent Publication (Kokai) No. Heisei 6-22659 discloses a particle for treating excretions, of which each particle is composed of a core layer and a skin layer both comprising super absorbent resin and pulp. Japanese Unexamined Patent Publication (Kokai) No. Heisei 9-252675 discloses a particle for treating excretions, which comprises pulp and inorganic salts. Japanese Unexamined Patent Publication (Kokai) No. Heisei 11-32608 discloses an excretions-treating material, which comprises a core of organic fibers and a skin layer that covers the core and comprises a polymer and an organic fibrous powder. Japanese Patent Publication No. 2516060 discloses an animal excretions-treating material that comprises fine fiber wastes and calcium carbonate.

However, as comprising hardly water-soluble inorganic substances and chemical fibers such as PP (polypropylene) and PE (polyethylene) fibers, the conventional excretions-absorbing materials set forth above are not biodegradable in septic tanks when disposed of in flush toilets, and they tend to deposit in septic tanks. Therefore, septic tanks having received the materials must be cleaned more frequently. In addition, the materials will flow out of septic tanks along with the water flowing out of them, and may pollute the water area around them. On the other hand, the conventional materials comprising a polymer have another problem in that the polymer swells in septic tanks and tends to float therein, as it does not decompose in water and is left as such.

In addition, the conventional materials that comprise inorganic substances and chemical fibers could not absorb excretions rapidly.

A further prior art animal excretions treating material is known from JP 11127713, which discloses a number of particles, each particle being composed of a core layer of fibers and a skin layer to cover the core layer, the skin layer containing fibers and a superabsorbent material, wherein the superabsorbent material may comprise polysaccharide (such as starch and cellulose).

### SUMMARY OF THE INVENTION

An object of the present invention is to provide an animal excretions-treating material which is biodegradable in septic tanks and can be disposed of in flush toilets with ease, and which can absorb excretions rapidly.

According to an aspect of the invention, there is provided a biodegradable animal excretions-treating material comprising particles, each particle being composed of a core layer of fibers and a skin layer to cover the core layer, the skin layer containing α-starch and fibers, characterised in that the fibers constituting the skin layer have a mean fiber length of from 0.02 to 1 mm.

As consisting essentially of biodegradable natural substance, the excretions-treating material of the invention is readily biodegradable in septic tanks. Therefore, septic tanks having received the material do not require more frequent cleaning, and will not pollute the water area around the septic tanks. In addition, since the α-starch in the skin layer is soluble in water, the material is readily decomposed in septic tanks, neither gelling nor floating in water therein. Accordingly, the material is, after use, directly disposed of in flush toilets with no problem.

Furthermore, excretions are rapidly absorbed by the fibers constituting the skin layer, and, after the skin layer has absorbed excretions, the α-starch therein dissolves in water to be sticky. Additionally, the water having been absorbed by the skin layer moves to the core layer and the water content of the skin layer is thereby reduced. As a result, the viscosity of the α-starch in the skin layer is increased. Having absorbed excretions, therefore, the particles surely adhere to each other, and readily mass into a solid.

Also preferably, the mean particle size of the α-starch in the skin layer is at most 0.25 mm; and the composition of the skin layer is preferably in a ratio of α-starch to fibers falling between 20 to 80 and 80 to 20.

The fibers in the skin layer are, for example, those of pulp.

The α-starch in the skin layer is, for example, tapioca α-starch.

The fibers in the core layer are, for example, those of pulp.

Preferably, the bulk density of the animal excretions-treating material falls between 0.1 and 0.5 g/cm³.

Also preferably, the diameter of each particle falls between 2 and 20 mm.

### BRIEF DESCRIPTION OF THE DRAWING

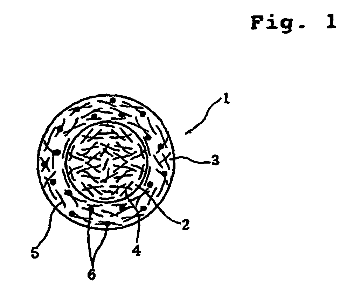

Fig. 1 is a cross-sectional view of one particle constituting an animal excretions-treating material of the invention.

### DESCRIPTION OF PREFERRED EMBODIMENTS OF THE INVENTION

The invention will be described hereinunder with reference to Fig. 1, which shows a cross-sectional view of one particle constituting an animal excretions-treating material of the invention.

As shown in Fig. 1, a particle 1 for treating excretions of the invention is composed of a core layer or core 2, and a skin layer 3 that covers the surface of the core layer 2. Thus composed of the core layer 2 and the skin layer 3, the particle 1 has a size of from 2 to 20 mm or so in terms of its diameter. The core layer 2 is formed of fibers 4. On the other hand, the skin layer 3 is formed of a mixture of fibers 5 and α-starch particles 6.

The fibers 4 constituting the core layer 2 may be any ones that are hydrophilic and biodegradable. For example, for them, usable are natural fibers such as pulp, cotton, sawdust, hemp; rayon fibers or the like. Especially preferably, the fibers 4 are those of pulp only, as having high absorbability and being readily granulated. In case of using pulp, the pulp fibers are preferably subjected to delignification treatment for increasing their water absorption.

The core layer 2 may contain natural coagulants such as starch, cellulosic polysaccharides, collagen and other proteins.

As in the case with the fibers 4, the fibers 5 in the skin layer 3 are hydrophilic and biodegradable. For example, for them, usable are natural fibers of pulp, cotton, sawdust, hemp, etc.; rayon fibers or the like. Especially preferably, the fibers 5 are those of high-absorbent pulp. In case of using pulp, the pulp fibers are preferably subjected to delignification treatment for increasing their water absorption.

The fibers 5 in the skin layer 3 are short fibers having a mean fiber length of from 0.02 mm to 1mm. Such short fibers have a larger surface area capable of being kept in contact with water in excretions, and therefore absorb excretions more rapidly. In addition, since the short fibers strongly bond to each other via hydrogen bonding therebetween, they well ensure the shape of each particle. Furthermore, as the short fibers have a larger surface area, the particles comprising them are, after having absorbed water, able to bond to each other in a larger area owing to the action of the α-starch in the skin layer of each particle (this will be described in detail hereinafter), and therefore ensure firm bonding of the particles having absorbed water. The short fibers of pulp may be prepared, for example, by grinding pulp sheets in a grinder provided with a plurality of sharp cutting tools. If the fiber length is smaller than the lowermost limit set forth above, the fibers 5 will drop off from the surface of the particle 1.

The α-starch included in the skin layer 3 is, for example, that of tapioca, wheat, corn, potatoes, etc. Among.those, preferred is tapioca α-starch, as being sticky and inexpensive.

Preferably, the mean particle size of the α-starch particles 6 is at most 0.25 mm. Using fine α-starch particles having such a small particle size is preferred, as they readily dissolve in water to be sticky when brought into contact with water. In addition, they facilitate coating of the surface of the core layer 2 with the skin layer 3 including the α-starch particles, when the particles 1 are formed. If, however, their mean particle size is larger than the defined range, such large α-starch particles 6 will poorly dissolve in water. As a result, the particles 1 comprising them tend to bond weakly to each other after having absorbed excretions. More preferably, the mean particle size of the α-starch particles 6 is at most 0.075 mm.

The α-starch content of the skin layer 3 preferably falls between 20 % by weight and 80 % by weight of the skin layer 3. If the α-starch content is larger than the defined range, the excessive α-starch will form a film on the surface of each particle 1 that has absorbed excretions, and the starch film may interfere with the penetration of excretions through it inside the particle 1. On the other hand, if the α-starch content of the skin layer 3 is smaller than the defined range, the adhesiveness of the particles having absorbed excretions to bond to each other will be low.

In the skin layer 3, the amount of the fibers 5 preferably falls between 20 % by weight and 80 % by weight of the skin layer 3. If the fiber content of the skin layer 3 is smaller than the defined range, the excretions-absorbing rate of each particle 1 will be low. Accordingly, excretions will spread over many particles kept in a tray, and will often reach the surface of the tray.

When used for treating excretions, the fibers constituting the skin layer of each particle of the invention rapidly absorb excretions. As the excretions-absorbing rate of the fibers is high, it prevents excretions from spreading over a wide range of the excretions-treating material. Accordingly, the amount of the particles to be used for absorbing excretions can be reduced, thereby being economical.

When having absorbed excretions, the α-starch in the skin layer of each particle of the invention dissolves in water to be sticky. In addition, the water having been absorbed by the skin layer moves toward the core layer, and therefore, the water in the skin layer is reduced. As a result, the viscosity of the α-starch in the skin layer is increased. Accordingly, the particles having absorbed water can surely bond to each other. After that, the wetted particles are spontaneously dried to lose water, and solidify while they firmly bond to each other. Accordingly, the excretions and the particles soiled by excretions around them can be discarded all in the form of a mass of the particles having absorbed excretions.

The mass of the particles thus having absorbed excretions can be disposed of in flush toilets without clogging the pipe line of drainage, since the α-starch therein is soluble in water and the particle does not gel in water. In addition, since water can readily penetrate thereinto, the particle does not float in septic tanks. Furthermore, since the particle is made of highly biodegradable substances, it is well degraded in ordinary septic facilities, thereby having no negative influences on the environment. Accordingly, the excretions-treating material of the invention is, after used, able to be disposed of in flush toilets with no problem.

Next, one example of producing the particle 1 of the invention will be described. Fibers for the core layer 2 are firstly dispersed in water, and then dewatered to have a water content of up to about 50 %. Then, using a disc pelletizer, the resulting fiber is pelletized into circular pellets having a diameter of from 2 to 4 mm or so, or into oval pellets having a minor axis of from 2 to 4 mm or so and a major axis of from 7 to 9 mm or so, to form the core layers 2.

In this step, the core layers 2 are preferably shaped under compression. This is because the water absorption rate of the core layers 2 of the final, excretions-treating material can be lowered in some degree. Accordingly, water can stay for a while in the skin layer of each particle having absorbed excretions, whereby the particles with α-starch therein having dissolved in water can more surely bond to each other.

On the other hand, fibers and α-starch for the skin layer 3 are mixed in, for example, a drum mixer. For the fibers 5, preferred are short fibers as set forth above, since they can be uniformly mixed with the α-starch particles 6. The core layers 2 having been prepared in the manner as above are put into the resulting mixture, and mixed for about 5 minutes. With that, all the core layers 2 are entirely coated with the skin layer 3.

After that, the thus-formed, two-layer particles are dried in hot air at about 120°C in the drum mixer so that the water content of the dried particles is reduced to at most 10 %. If the water content thereof is larger than 10 %, the absorbability of the excretions-treating material will be low, and resulting in fungus growth and getting moldy while stored. Preferably, the final bulk density of the excretions-treating material falls between 0.1 and 0.5 g/cm³.

Upon forming the skin layer 3, the water existing in the core layer 2 moves toward the skin layer 3, and dissolves the α-starch 6 including in the skin layer 3, and the thus-dissolved α-starch acts to bond the fibers 5 to each other. Accordingly, the fibers 5 and the α-starch particles 6 do not easily drop off from the surface of each particle 1. In addition, by drying the particles 1 in the drum mixer, their surfaces are mechanically processed as if they were ironed to prevent the fibers existing therein from being fuzzy.

If desired, the skin layer 3 may contain an anti-powdering agent. The anti-powdering agent may be a natural compound, including, for example, polyethylene glycol, glycerin, molasses, carboxymethyl cellulose, etc. Preferably, the amount of the anti-powering agent is at most 1 % by weight of the skin layer. Among those set forth above, polyethylene glycol is preferred.

Also if desired, the particle of the excretions-treating material of the invention may contain any other substances without interfering with the effect of the invention. For example, the particle may contain a water absorbent such as bentonite or zeolite, an inorganic substance such as kaolin, and others such as fragrance, colorant, surfactant, microbicide, preservative, deodorizer, etc.

The animal excretions-treating material of the invention is usable in keeping almost all animals, and is most favorable for keeping indoor small animals and pets such as cats, rabbits, rats, mice and squirrels. In case where the animal excretions-treating material is used for such small animals, each of the particles may be compressed to have a thickness of at most 3 mm so that they do not scatter away from the tray or the litter box where they are put.

### EXAMPLES

The invention is described in more detail with reference to the following Examples, which, however, are not intended to restrict the scope of the invention.

The particle as shown in Fig. 1 was produced according to the method set forth above by use of the components shown in Table 1 below. The tapioca α-starch is used as a α-starch. The tapioca α-starch has a particle size of at most 0.10 mm. The pulp fibers have a mean fiber length of 0.10 mm.

According to the methods mentioned below, each example thus produced was tested to measure its bulk density, and the weight and the strength of the solidified mass of the particles, and the appearance of the solidified mass was macroscopically checked. The comparative examples in which the skin layer was made of pulp only or α-starch only were also tested in the same manner. The test results are shown in Table 1.

### Bulk Density:

A one-liter mess-cup is filled with the particles to be tested, and its weight is measured.

### Weight of Solidified Mass:

The particles to be tested are uniformly put into the tray having a depth of 40 mm. At a height of 2 cm from the surface of the particles spread over the tray, 20 cc of a 0.9 wt.% sodium chloride solution is dropwise applied to the particles over a period of 10 seconds. Only solidified mass part of the particles having absorbed the solution is taken out, and its weight is measured.

### Strength of Solidified Mass:

Five minutes after applying the solution to the particles, a stainless stick having a diameter of 5 mm is stuck into the solidified mass of the particles having absorbed the solution at a rate of 500 mm/min, and the maximum resistance force of the solidified mass against the piercing stick is measured by use of a digital force gauge.

### Appearance of Solidified Mass:

The appearance of the solidified mass of the particles having absorbed the solution is macroscopically checked in a lateral direction.

**Table 1**

| | | | Co. Ex. 1 | Ex. 1 | Ex. 2 | Ex. 3 | Ex. 4 | Ex. 5 | Co. Ex. 2 |
|---|---|---|---|---|---|---|---|---|---|
| Core Layer | Pulp | (wt%) | 100 | 100 | 100 | 100 | 100 | 100 | 100 |
| Skin Layer | α-starch | (wt%) | 0 | 10 | 20 | 50 | 80 | 90 | 100 |
| | Pulp | (wt%) | 100 | 90 | 80 | 50 | 20 | 10 | 0 |
| Test Results | Bulk density | (g/liter) | 160 | 200 | 230 | 290 | 350 | 400 | 430 |
| | Weight of solidified mass | (g) | 32.1 | 34.3 | 35.2 | 38.8 | 45.6 | 56.1 | 702 |
| | Strength of solidified mass | (N) | 0 | 0.5 | 1.5 | 2.1 | 2.5 | 3.1 | 4.1 |
| | Appearance of solidified mass | | not solidified | spherical | spherical | spherical | spherical | conical | tubular |
| | Other remarks | | | brittle | | | | unable to completely catch urine | unable to urine |

As set forth above, the excretions-treating material of the invention can rapidly absorb excretions, and the particles thereof surely bond to each other and readily mass into a solid when having absorbed excretions. Accordingly, the amount of the excretions-treating material necessary for one application in the tray can be reduced. After having absorbed excretions, the excretions-treating material can be readily taken out and discarded in the form of a mass of the particles. Therefore, the excretions-treating material is easy to use. In addition, the tray filled with the particles can be kept clean.

Furthermore, the solidified mass of the particles having absorbed excretions can be disposed of in flush toilets with ease.

While the invention has been described in detail and with reference to specific embodiments thereof, it will be apparent to one skilled in the art that various changes and modifications can be made therein without departing from the scope of the appended claims.

## Claims

1. A biodegradable animal excretions-treating material comprising particles, each particle (1) being composed of a core layer (2) of fibers and a skin layer (3) to cover the core layer, the skin layer containing α-starch and fibers,
**characterised in that** the fibers constituting the skin layer have a mean fiber length of from 0.02 to 1 mm.

2. The animal excretions-treating material as set forth in claim 1, wherein the mean particle size of the α-starch in the skin layer is at most 0.25 mm.

3. The animal excretions-treating material as set forth in claim 1, wherein the composition of the skin layer is in a ratio of α-starch to fibers falling between 20 to 80 and 80 to 20.

4. The animal excretions-treating material as set forth in claim 1, wherein the fibers in the skin layer are those of pulp.

5. The animal excretions-treating material as set forth in claim 1, wherein the α-starch in the skin layer is tapioca α-starch.

6. The animal excretions-treating material as set forth in claim 1, wherein the fibers in the core layer are those of pulp.

7. The animal excretions-treating material as set forth in claim 1, which has a bulk density falling between 0.1 and 0.5 g/cm³.

8. The animal excretions-treating material as set forth in claim 1, wherein the particle has a diameter falling between 2 and 20 mm.

## Patentansprüche

1. Biozersetzbares Material zur Behandlung von Tierexkrementen, das Teilchen (1) enthält, die jeweils aus einer Kernschicht (2) aus Fasern und einer die Kernschicht bedeckende Schalenschicht (3), die α-Stärke und Fasern enthält, zusammengesetzt sind,
**dadurch gekennzeichnet, daß** die die Schalenschicht bildenden Fasern eine mittlere Faserlänge von 0,02 bis 1 mm aufweisen.

2. Material nach Anspruch 1, wobei die mittlere Teilchengröße der α-Stärke in der Schalenschicht höchstens 0,25 mm beträgt.

3. Material nach Anspruch 1, wobei die Zusammensetzung der Schalenschicht ein Verhältnis von α-Stärke zu Fasern aufweist, das zwischen 20 zu 80 und 80 zu 20 fällt.

4. Material nach Anspruch 1, wobei die Fasern in der Schalenschicht Pulpe-Fasern sind.

5. Material nach Anspruch 1, wobei die α-Stärke in der Schalenschicht Tapioka-α-Stärke ist.

6. Material nach Anspruch 1, wobei die Fasern in der Kernschicht Pulpe-Fasern sind.

7. Material nach Anspruch 1 mit einer Massendichte, die zwischen 0,1 und 0,5 g/cm³ fällt.

8. Material nach Anspruch 1, wobei die Teilchen jeweils einen Durchmesser aufweisen, der zwischen 2 und 20 mm fällt.

## Revendications

1. Matière biodégradable de traitement d'excréments d'animaux comprenant des particules, chaque particule (1) étant composée d'une couche (2) de noyau constitué de fibres et d'une couche pelliculaire (3) pour couvrir la couche de noyau, ladite couche pelliculaire contenant de l'amidon α et des fibres,
**caractérisée en ce que** la longueur de fibres moyenne des fibres constituant la couche pelliculaire est de 0,02 à 1 mm.

2. Matière de traitement d'excréments d'animaux selon la revendication 1, dans laquelle la dimension moyenne de particules de l'amidon α dans la couche pelliculaire est au plus de 0,25 mm.

3. Matière de traitement d'excréments d'animaux selon la revendication 1, dans laquelle le rapport entre l'amidon α et les fibres, dans la composition de la couche pelliculaire, est compris entre 20 à 80 et 80 à 20.

4. Matière de traitement d'excréments d'animaux selon la revendication 1, dans laquelle les fibres de la couche pelliculaire sont des fibres de pulpe.

5. Matière de traitement d'excréments d'animaux selon la revendication 1, dans laquelle l'amidon α de la couche pelliculaire est de l'amidon α de tapioca.

6. Matière de traitement d'excréments d'animaux selon la revendication 1, dans laquelle les fibres de la couche de noyau sont des fibres de pulpe.

7. Matière de traitement d'excréments d'animaux selon la revendication 1, dont la densité apparente est comprise entre 0,1 et 0,5 g/cm³.

8. Matière de traitement d'excréments d'animaux selon la revendication 1, dans laquelle le diamètre des particules est compris entre 2 et 20 mm.
